# EUROPEAN PATENT SPECIFICATION

(11) **EP 1 800 845 B1**
(45) Date of publication and mention of the grant of the patent: **23.09.2009**
(21) Application number: 06024642.8
(22) Date of filing: 28.11.2006
(51) Int. Cl.: B29D 30/30, B60C 15/00

(54) **Pneumatic tire and method of manufacturing the same**
Luftreifen und Verfahren zu seiner Herstellung.
Pneumatique et son procédé de fabrication.

(30) Priority: 20.12.2005 JP 2005366880
(43) Date of publication of application: 27.06.2007
(73) Proprietor: SUMITOMO RUBBER INDUSTRIES, LTD., Hyogo-ken (JP)
(72) Inventor: Miki, Youjirou Sumitomo Rubber Industries, Ltd., Kobe-shi Hyogo-ken (JP)
(74) Representative: Manitz, Finsterwald & Partner GbR

(56) References cited:
- EP-A- 1 216 815
- EP-A- 1 454 732
- JP-A- 2002 127 718
- US-A- 5 379 818
- US-A1- 2005 145 314

## Description

### Field of the Invention

The present invention relates to a pneumatic tire comprising an annular rubber component formed by spirally winding a ribbon-like rubber strip around a tire axis, and a method of manufacturing the same thereof, and more particularly to a technique for enhancing uniformity and the like of the tire.

### Description of the Related Art

In recent years, there is proposed a rubber component for a tire which has a desired cross section shape by spirally winding a ribbon-like unvulcanized rubber strip around an outer surface of a cylindrical body such as a tire making-drum while shifting its position in an axial direction of the cylindrical body. Such a manufacturing method of the rubber component is called a "strip winding method", for example. Since it is unnecessary to use a large-scale rubber extruder, there are merits that a plant can be simplified, a die exchanging operation or an adjusting operation of the rubber extruder are unnecessary and thus productivity is enhanced.

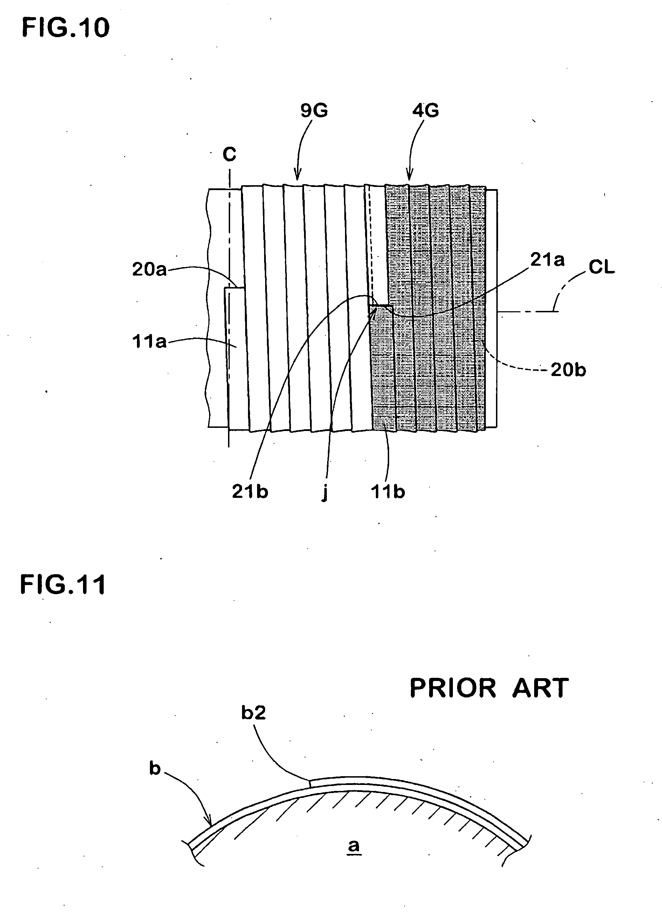

As shown in Fig. 11, according to such a strip winding method, however, a step is inevitably formed in thickness direction at a position of a terminating end b2 of a rubber strip b wound around a cylindrical body (a). Such a step makes the thickness of the rubber member uneven in a circumferential direction of the tire, and deteriorates the tire uniformity. If another rubber component is overlapped on the outer surface of such a rubber component, a gap in which rubber is not filled tends to be generated near the step between rubber components. Such a gap brings the tire vulcanization failure, and deterioration of durability.

US 2005/0145314 A1 describes a pneumatic tire according to the preamble of claim 1.

US 5,379,818 describes a belted radial tire for motorcycles. The tire comprises a pair of bead cores disposed one in each bead portion of the tire, a carcass extending between the bead portions through sidewall portions and a tread portion of the tire. The carcass has at least one ply of organic fiber cords arranged radially at an angle of 60 to 90° to the tire equator. A tread disposed radially outside the carcass defines the tread portion. A belt is disposed radially outside the carcass and inside the tread. The belt comprises two ply pieces made of at least one spirally wound cord with an elastic modulus of not less than 600 kgf/sq.mm. Each of the two belt ply pieces are formed by winding a ribbon of rubber of the same material, in which the belt cord is embedded, spirally around the carcass from the axially outer edge thereof toward the tire equator.

### SUMMARY OF THE INVENTION

It is a main object of the present invention to provide a pneumatic tire and a method of manufacturing the same capable of reducing the step caused by one circumferential end of the rubber strip, and to prevent the uniformity and the durability from being deteriorated.

According to one aspect of the present invention, a pneumatic tire according to claim 1, comprises a first rubber portion being formed by spirally winding a first rubber strip around the tire axis so as to extend in a circumferential direction of the tire, a second rubber portion having different compound from the first rubber portion and being formed by spirally winding a second rubber strip around the tire axis so as to extend in a circumferential direction of the tire, the first rubber strip and the second rubber strip each having circumferential ends, and a butt joint portion being provided between one circumferential end of the first rubber strip and one circumferential end of the second rubber strip at least partially so that the first rubber strip and the second rubber strip are continuous with each other.

In a method according to claim 4, of manufacturing the pneumatic tire having a first rubber portion and a second rubber portion each having different compound and being continuous with each other according to the present invention, the method comprises the steps of
winding a first rubber strip spirally around a cylindrical body to form the first rubber portion,
winding a second rubber strip spirally around the cylindrical body in the same direction as the first rubber strip to form the second rubber portion, and
joining one circumferential end of the first rubber strip to one circumferential end of the second rubber strip so that the ends are butted at least partially.

Preferred embodiments of the invention are defined in the dependent claims.

### BRIEF DESCRIPTION OF THE DRAWINGS

Embodiments of the present invention will now be described in detail in conjunction with the accompanying drawings.
Fig. 1 is a sectional view of a pneumatic tire showing an embodiment of the present invention;
Fig. 2 is a perspective view of a rubber strip;
Fig. 3 is a perspective view showing one embodiment of a forming apparatus for a rubber component;
Fig. 4 is a plan view of a cylindrical body used for explaining winding step of rubber strips;
Fig. 5 is a plan view of the cylindrical body used for explaining winding step of the rubber strips;
Fig. 6 is a plan view of the cylindrical body used for explaining winding step of the rubber strips;
Fig. 7 is a part of sectional view taken along the line A-A' in Fig. 6;
Figs. 8(A) and 8(B) are schematic sectional views used for explaining forming step of a green tire;
Fig. 9 is a plan view of the cylindrical body used for explaining winding step of rubber strips according to another embodiment;
Fig. 10 is a plan view of the cylindrical body used for explaining winding step of rubber strips according to the other embodiment; and
Fig. 11 is a sectional view used for explaining a conventional technique.

### DETAILED DESCRIPTION OF THE PREFERRED EMBODIMENTS

In the drawings, a pneumatic tire 1 according to the present invention comprises a tread portion 2, a pair of sidewall portions 3, a pair of bead portions 4 each with a bead core 5 therein, a carcass 6 extending between the bead cores 5 through the tread portion 2 and sidewall portions 3, and a belt 7 disposed radially outside the carcass 6 in the tread portion 2.

The carcass 6 is composed of at least one ply 6A of cords arranged radially at an angle in the range of from 70 to 90 degrees with respect to the tire equator C, extending between the bead portions 4 through the tread portion 2 and sidewall portions 3 and turned up around the bead core 5 in each bead portion 4 from the axially inside to the axially outside of the tire to form a pair of turnup portions 6b and a main portion 6a therebetween. A bead apex 8 is disposed between each main portion 6a and the turnup portion 6b. The bead apex 8 extends from the bead core 5 radially outward of the tire.

The belt 7 comprises superposed two or more (two, in this embodiment) belt plies 7A and 7B in which metal cords are arranged at 15 to 40° with respect to the circumferential direction of the tire.

The belt 7 comprises two cross plies 7A and 7B of steel cords laid at an angle of from 15 to 40 degrees with respect to the tire equator C.

Further, the pneumatic tire 1 comprises: a tread rubber component 2G disposed radially outside of the belt 7 in the tread portion 2; a pair of sidewall rubber components 3G each disposed axially outside of the carcass 6 in the sidewall portion 3; a pair of clinch rubber components 4G each disposed axially outside of the carcass 6 in bead portions 4 and whose radially outer ends are connected to the sidewall rubber components 3G and whose radially inner ends forms a bead seat which comes into contact with a rim; and an inner liner rubber component 9G with gas-barrier property disposed inside of the carcass 6. The inner liner rubber component 9G extends between the bead portions 4, and each radially inner end thereof is connected with the clinch rubber component 4G.

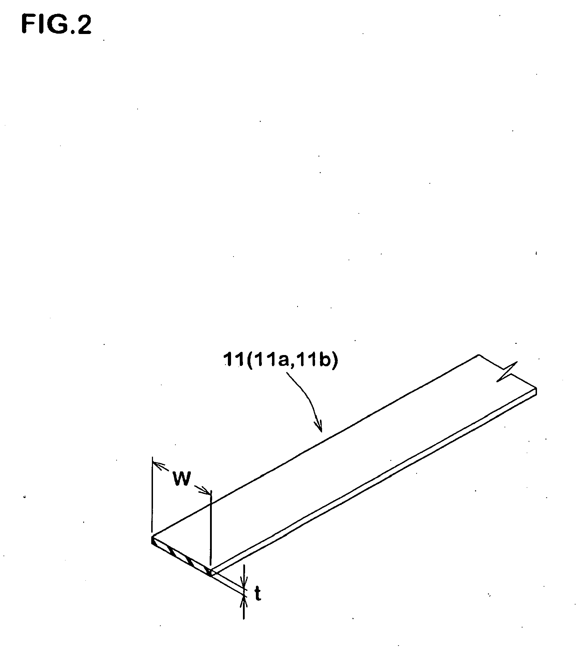

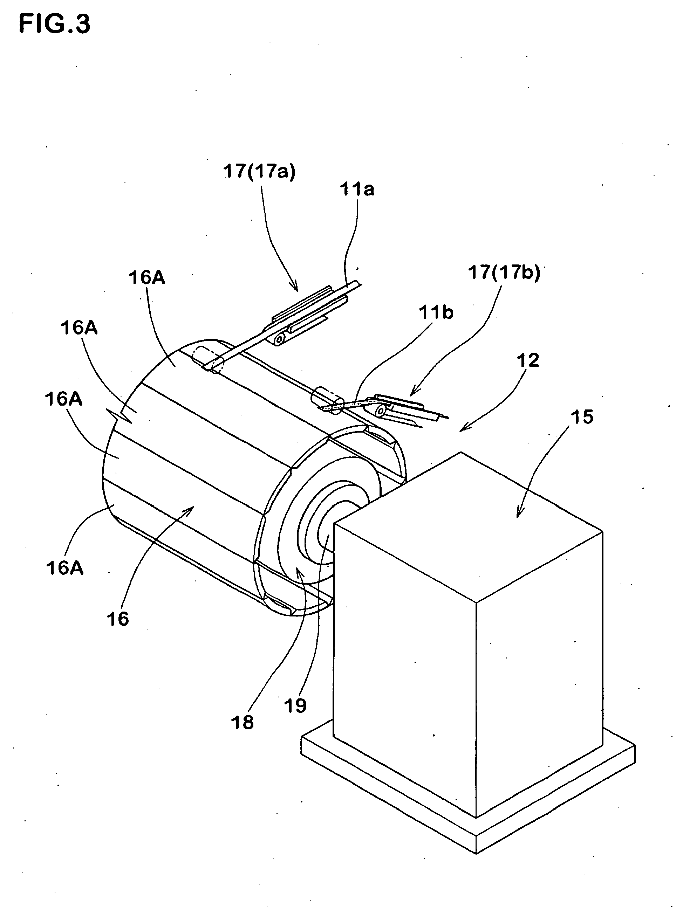

In the pneumatic tire 1 according to the present embodiment, at least clinch rubber components 4G and the inner liner rubber component 9G are formed using strip layered bodies 10. The strip layered body 10 is a rubber component which is finished to have a predetermined cross section by spirally winding an unvulcanized rubber strip 11 as shown in Fig. 2 around a cylindrical body 16 as shown in Fig. 3.

In the embodiment, the inner liner rubber component 9G is formed by a first rubber strip 11a, and the clinch rubber component 4G is formed by a second rubber strip 11b. The first rubber strip 11a and the second rubber strip 11b are made of different rubber compounds. For example, the inner liner rubber 9G has a rubber compound such as butyl rubber or butyl halide rubber having excellent gas barrier properties for preventing air filled in the tire from leaking. The clinch rubber 4G has a rubber compound having excellent wear resistance, e.g., natural rubber and butadiene rubber because the clinch rubber 4G comes into contact with the rim.

The rubber strip 11 (when rubber strips are collectively called, a symbol "11" is used) is continuously supplied to the cylindrical body 16 on which the strip 11 is wound in a form of a ribbon from a strip producing apparatus (not shown) including a rubber extruder and a calender. The rubber strip 11 is not especially limited, but if a width w thereof or a thickness t thereof is too small, the number of winding times of the rubber strip 11 is largely increased and the productivity is deteriorated. If the width w or the thickness t of the strip is too large, it becomes difficult to form a strip layered body 10 with a fine cross section of. From such a point of view, it is preferable that the width w of the rubber strip 11 is in a range of from 5 to 30 mm, and the thickness t is in a range of from 0.5 to 3.0 mm.

The first and the second rubber strips 11a and 11b are supplied to cylindrical body 16 of a forming apparatus 12 for strip layered body as shown in Fig. 3.

The forming apparatus 12 comprises a base body 15, the cylindrical body 16 which is rotatably supported by the base body 15 using a shaft 19, and applicators 17 which guide the first and the second rubber strips 11a and 11b to a predetermined winding position of the cylindrical body 16.

The base stage 15 is provided therein with an electric motor (not shown) and a power transmitting apparatus (not shown) for transmitting torque of the electric motor to the cylindrical body 16. The torque of the electric motor is outputted to the shaft 19 which is rotatably supported at one side of the base body 15.

The cylindrical body 16 includes a plurality of segments 16A ... arranged in the circumferential direction, and an actuator device (details are not illustrated) 18 being provided on the shaft 19 in a space surrounded by the segments 16A ... for moving the segments 16A ... radially inward and outward. Surfaces of the segments 16A can align with one another in the circumferential direction so as to form a cylindrical surface at a position moved radially outward of the tire by the actuator 18. The segments 16A ... are alternately moved radially inward of the tire. With this, a diameter of the outer peripheral surface can be reduced. This is of use in taking out the strip layered body 10 wound up from the cylindrical body 16. Therefore, the cylindrical body 16 can be tuned in a predetermined orientation and at a predetermined speed together with the shaft 19. The rotation speed of the cylindrical body 16 and the increasing and reducing operation of the diameter of segments 16A are appropriately adjusted by a controller (not shown).

The applicator 17 is like a belt conveyer for example, and its transfer surface can continuously guide the rubber strip 11 to a predetermined winding position of the cylindrical body 16. The strip producing apparatus (not shown) and a buffering apparatus (not shown) which can temporarily control the supplying speed of the rubber strip are provided on the upstream side of the applicators 17. Each applicator 17 is supported by a three-dimensionally moving apparatus (not shown) so that the applicator 17 can reciprocate at least in the axial direction with respect to the cylindrical body 16.

In the embodiment, a first applicator 17a, and a second applicator 17b which is deviated from the first applicator 17a in the circumferential direction of the cylindrical body 16. with this, even when the first and second applicators 17a and 17b are located at the same position in the axial direction of the cylindrical body 16, they can alternately reciprocate without interfering with each other. Further, the first applicator 17a continuously guides the first rubber strip 11a for forming the inner liner rubber component 9G to a predetermined position of the cylindrical body 16, and the second applicator 17b continuously guides the second rubber strip 11b for forming the clinch rubber component 4G to the predetermined position of the cylindrical body 16.

One example of a forming method of the clinch rubber component 4G and the inner liner rubber component 9G using the forming apparatus 12 will be described.

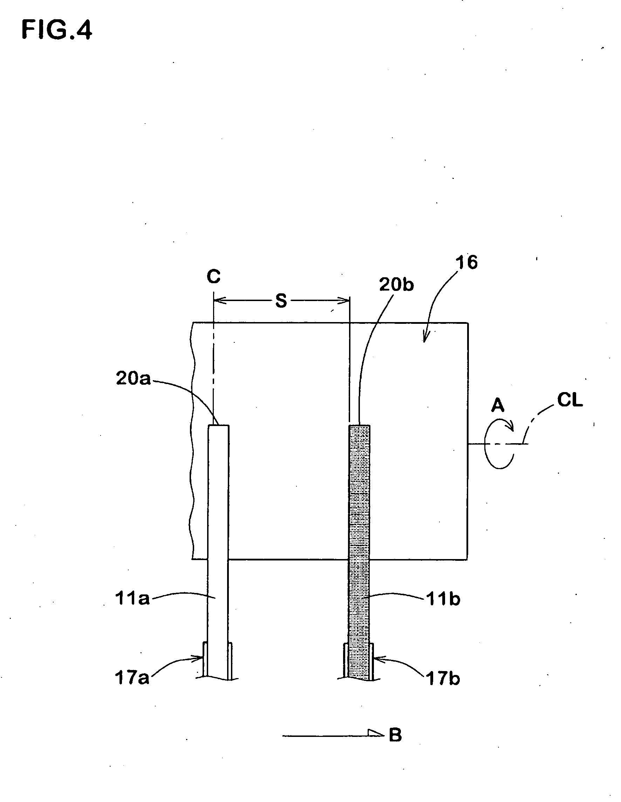

Fig. 4 is a partial plan view of the cylindrical body 16. In the drawings, the symbol CL represents a center axis of the shaft 19, and the symbol C represents a center of the cylindrical body 16 in the axial direction. First, each starting ends 20a and 20b of the first and second rubber strips 11a and 11 b are fixed to the outer surface of the cylindrical body 16. This can be carried out by pressing each rubber strips 11a and 11b against the cylindrical body 16 using a roller (not shown) while utilizing the tackiness of the rubber strip 11 itself. Here, each starting end of the rubber strip is one circumferential end of the strip in which the winding thereof is started.

In the present embodiment, the starting end 20a of the first rubber strip 11a for the inner liner rubber component 9G is fixed in the vicinity of the center line C of the cylindrical body 16 in the axial direction. The starting end 20b of the second rubber strip 11b for the clinch rubber component 4G is fixed to a position separated from the center line C at a distance s outside. This distance S is preset based on a tire size or the like.

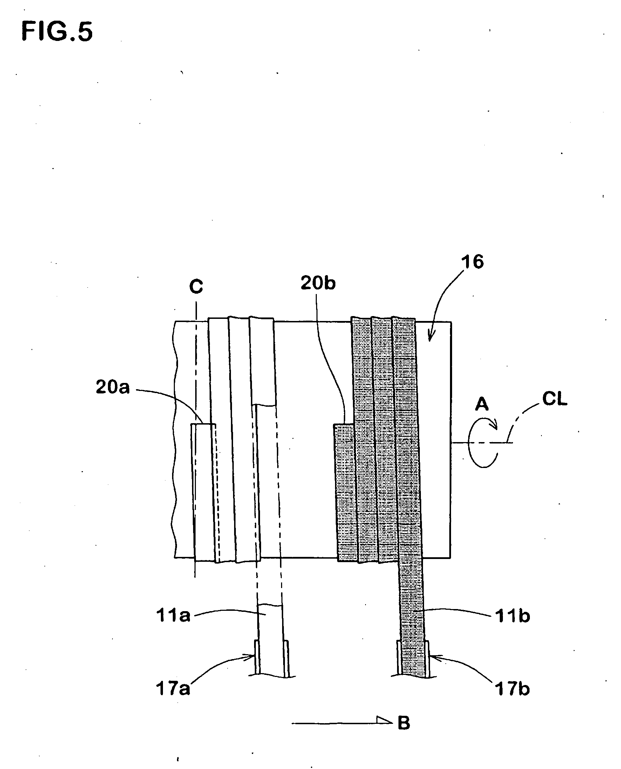

Next, as shown in Fig. 5, the cylindrical body 16 is rotated in the direction of the arrow "A" and the first and second applicators 17a and 17b are moved in the axial direction B so that the first rubber strip 11a approaches to the second rubber strip 11b. with this, the first and second rubber strips 11a and 11b are spirally wound around the outer surface of the cylindrical body 16 in the same direction and start forming the clinch rubber component 4G and the inner liner rubber component 10. The first and second rubber strips 11a and 11b are wound in such a manner that side edges of the rubber strips 11a and 11b are overlapped on each other without making a gap therebetween. The spiral pitches of the rubber strips 11a and 11b are freely adjusted by individually adjusting the moving speeds of the applicators 17a and 17b in the axial direction.

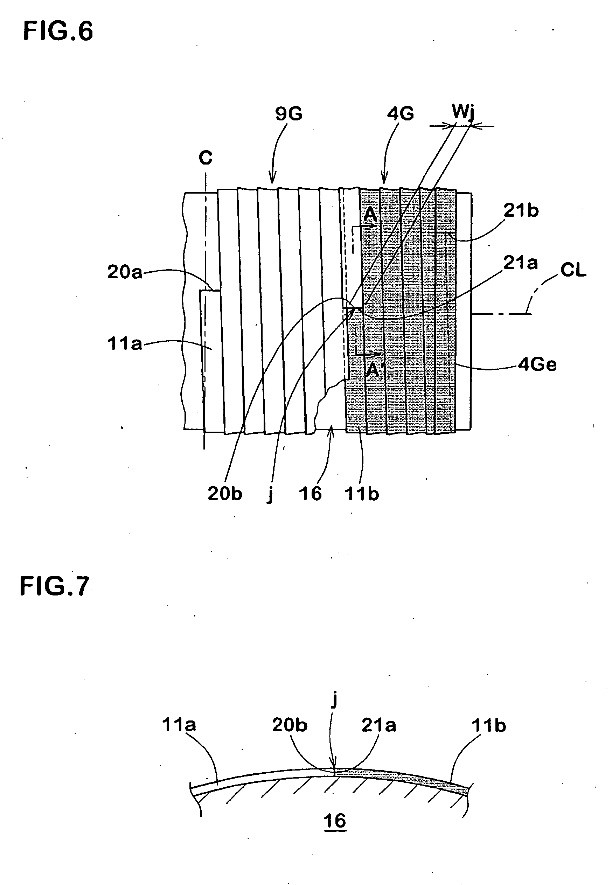

Next, as shown in Fig. 6, a terminating end 21a of the first rubber strip 11a is provided substantially at the same position as that of the starting end 20b of the second rubber strip 11b in the circumferential direction and the axial direction so that both ends 21a and 20b are butt-jointed. Here, the terminating end of the rubber strip is one circumferential end in which the winding of the rubber strip is terminated. As shown in Fig. 7 being a partial sectional view taken along the line A-A' in Fig. 6, at least a part of the terminating end 21a of the first rubber strip 11a and at least a part of the starting end 20b of the second rubber strip 11b are jointed so as to form a butt joint portion J at which the first rubber strip 11a and the second rubber strip 11b are continuous. Therefore, a large step is not formed by the end of the rubber strip unlike the conventional technique, the uniformity of the tire is enhanced. It is possible to prevent air from remaining between rubber components, vulcanization failure is avoided and durability can be enhanced.

For example, the terminating end 21a of the first rubber strip 11a is formed by cutting the first rubber strip 11a after stopping the rotation of the cylindrical body 16, and then its end 21a is precisely aligned with and is jointed to the starting end 20b of the second rubber strip 11b.

A width wj of the butt joint portion j at which the rubber strips 11a and 11b are continuous is not especially limited, but if the width wj is too small, it is not possible to sufficiently prevent the step from being generated. On the other hand, in order to form large width wj, it is necessary to vary or adjust the spiral pitch of the rubber strip at the end in some case. From such a view point, the width wj of the butt joint portion j is preferably not less than 40% of the width w of the rubber strip 11, more preferably not less than 50%, and more preferably not less than 60%, and it is most preferable that the width wj is provided over the entire width w of the rubber strip 11.

As shown in Fig. 6, a terminating end portion of the second rubber strip 11b having a circumferential length from the terminating end 21b is wound along the circumferential direction of the cylindrical body 16 continuously at least one round. Therefore, the clinch rubber component 4G has a side edge 4Ge which is in parallel to the circumferential direction, and the clinch rubber component 4G does not have a portion projecting from the side edge 4Ge. This side edge 4Ge can reduce the air remaining in the overlapped portion between the clinch rubber component 4G and the sidewall rubber component 3G, and this is of use in enhancing the uniformity. A starting end portion of the first rubber strip 11a having a circumferential length from the starting end 20a can also be wound along the circumferential direction of the cylindrical body 16 continuously at least one round so that the axially outer side edge thereof is in parallel to the circumferential direction.

Although only about half of the cylindrical body 16 in the axial direction is shown in Figs. 4 to 6, remaining half is also carried out in the same manner above. At that time, the winding step is preferably performed symmetrically and simultaneously on the both sides with respect to the center line C of the cylindrical body 16. The rubber strip 11, however, is wound on one side and the other side of the center C with time lag of course.

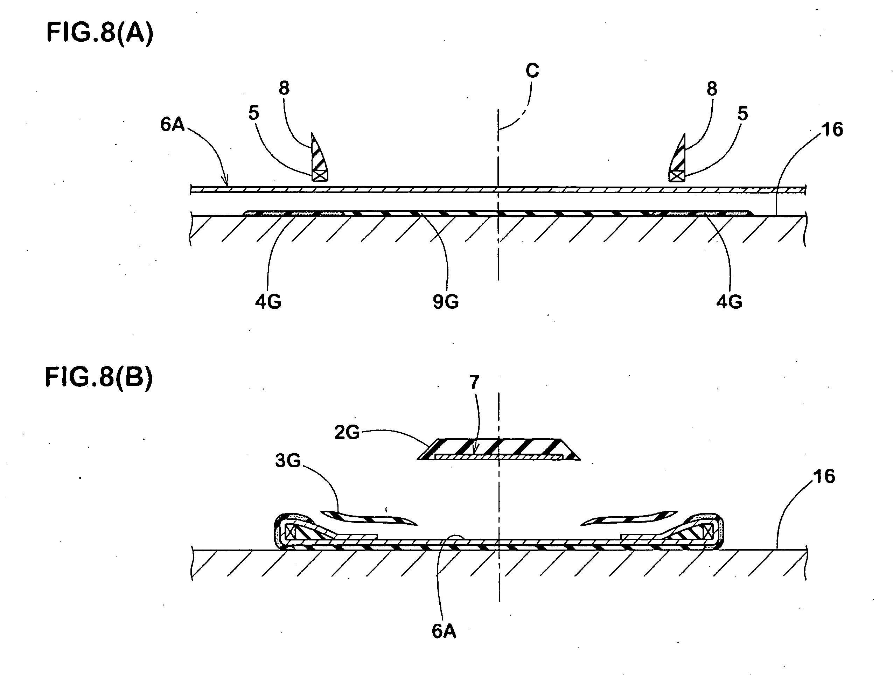

As shown in Fig. 8(A), the carcass ply 6A, the bead core 5 and the bead apex rubber 8 are disposed radially outside of the inner liner rubber component 9G and the clinch rubber component 4G formed in this manner and then, both ends of the carcass ply 6A are turned up around the bead cores 5. As shown in Fig. 8(B), a pair of sidewall rubber components 3G are disposed radially outside carcass ply 6A. After that, the carcass ply 6A is swollen radially outward of the tire while reducing a distance between the bead cores 5. with this, a tread region of the carcass ply 6A is attached to a tread ring with the belt 7 and the tread rubber component 2G, and a toroidal green tire is formed (not shown). Further, by molding the green tire using a tire vulcanizing mold, the pneumatic tire 1 is manufactured.

Since the pneumatic tire manufactured by the present embodiment has the butt joint portion J between the clinch rubber component 4G and the inner liner rubber component 9G coming into contact with each other, uniformity and durability of the tire can be improved.

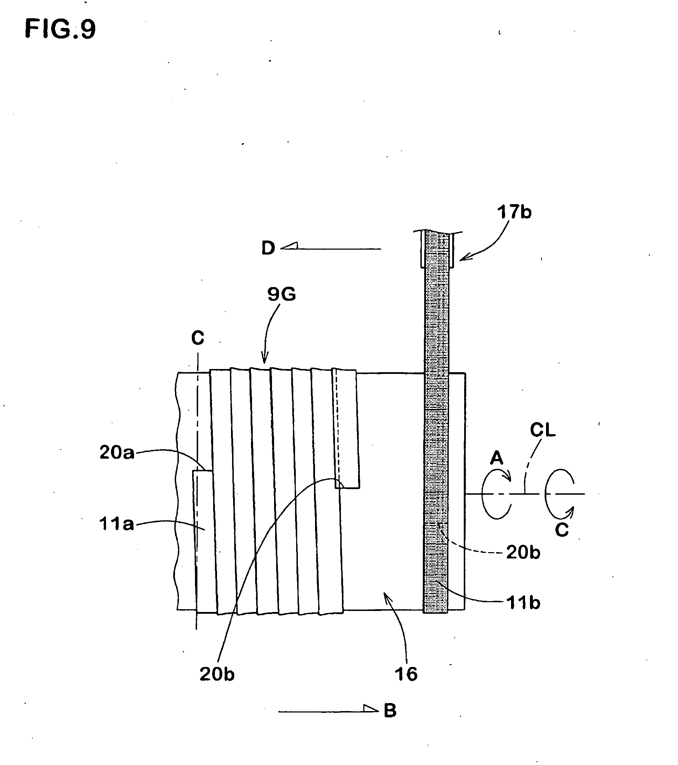

Figs. 9 and 10 show another embodiment of the invention. In this embodiment, the first rubber strip 11a is first spirally wound around the cylindrical body 16 to form the inner liner rubber component 9G. At that time, the first rubber strip 11a is wound by rotating the cylindrical body 16 in the direction of the arrow "A" and by moving the first applicator 17a (not shown) which guides the first rubber strip 11a in the direction of the arrow B.

After the winding of the first rubber strip 11a, the starting end 20b of the second rubber strip 11b is fixed to the cylindrical body 16a away from the inner rubber component 9G being formed thereon. Then, the winding step of the second rubber strip 11b is started for forming the clinch rubber component 4G. At that time, a starting end portion having a circumferential length from the starting end 20b of the second rubber strip 11b is preferably wound at least one time continuously along the circumferential direction of the cylindrical body 16 from the starting end 20b thereof. In this embodiment, the second rubber strip 11b is wound by rotating the cylindrical body 16 in the direction of arrow C and by moving the second applicator 17b in the direction of the arrow D. That is, the second rubber strip 11b is wound in the opposite spirally direction and opposite axial direction from those of the first rubber strip 11a. For example, the second applicator 17b is located on the opposite side from the cylindrical body 16 which is deviated in position in the circumferential direction from the first applicator 17a by 180 degrees.

As shown in Fig. 10, the terminating end 21b of the second rubber strip 11b is butt-jointed to at least a part of the terminating end 21a of the first rubber strip. Accordingly, in this embodiment, the but joint portion j at which the both terminating ends 21a and 21b of the first and the second rubber strips 11a and 11b are butted and continuous each other can be formed over the entire range of the width w of the rubber strip 11. Therefore, it is possible to further enhance the uniformity and the like.

Although the embodiment of the invention has been explained using the clinch rubber component 4G and the inner liner rubber component 9G, the invention is not limited to such a combination of the rubber components, and the invention can be applied to combinations of various rubber components constituting the tire. In the embodiment of Figs.4 to 6, the winding steps of the first rubber strip 11a and the second rubber strip 11b are started at the same time, but if the starting end 21a of the first rubber strip 11a can be jointed to the starting end 20b of the second rubber strip 11b, the starting timing of the winding step of the second rubber strip 11b can appropriately be changed.

### Comparative test:

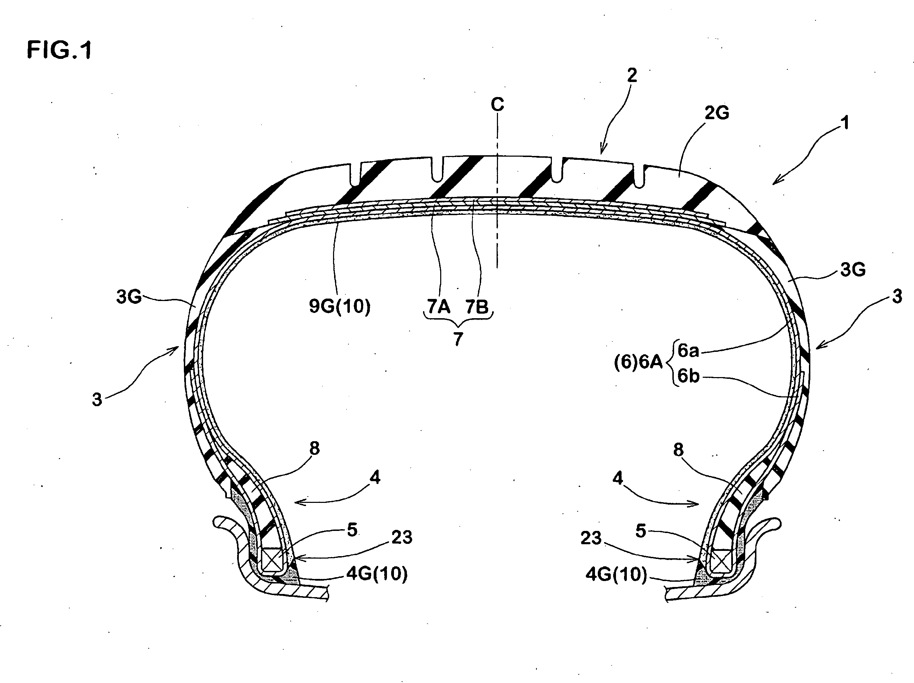

In order to confirm the effect of the present invention, pneumatic tires of size "215/60R16 95H" were manufactured based on specification shown in Table 1. Each tire has the common internal structure as shown in Fig. 1 except a clinch rubber component and an inner liner rubber component. The tires of the examples have the inner liner rubber components and the clinch rubber components as shown in Fig. 6 or 10, but in a tire of Reference, the terminating end of the inner liner rubber component is deviated in position in the circumferential direction from the starting end of the clinch rubber by 180 degrees. Widths of the first and second rubber strips are 10.0 mm. Uniformity and durability of each tire were tested by the following method. Uniformity Test:

A radial force variation (RFV) which is variation component in the radial direction of the reaction force of the tire, and a radial runout (RRO) which is runout of the tread outer surface in the radial direction of the tire were measured (average value of n = 20) using a cornering tester in accordance with uniformity test condition of JASO C607: 2000. Measurement conditions are as follows. Results are shown with indices in which a value of the reference is 100. As the numeric value is smaller, the result is more excellent.
Rim size: 16×7-JJ
Internal pressure; 200 kPa
Evaluation speed: 10 km/h

### Durability Test

using a tire drum tester, the test tire was continuously run under the following test conditions until any damage occured and the total running distance was measured (average value of n = 20). The results are indicate in Table 1 by an index based on Reference being 100. The larger the value, the better the durability.
Rim size: 16×7-JJ
Internal pressure; 200 kPa
Vertical load: 9.1 k_{N}
Evaluation speed: 80 km/h
Results of the test and the like are shown in Table 1.

**Table 1**

| | Reference | Example 1 | Example 2 |
|---|---|---|---|
| Drawing showing structure | Fig. 6 * | Fig. 6 | Fig. 10 |
| Ratio (wj/w) [%] | 0 | 92 | 92 |
| RFV (index) | 100 | 97 | 98 |
| RRO (index) | 100 | 96 | 96 |
| Durability (index) | 100 | 109 | 107 |

| | | | |
|---|---|---|---|
| * Position of terminating end of inner liner rubber is deviated from starting end of the clinch rubber by 180 degrees. | | | |

From the results of the test, it can be confirmed that the tires of the examples have smaller RFV and RRO and more excellent uniformity as compared with the Reference. It was also confirmed that the tires of the examples had more excellent durability.

## Claims

1. A pneumatic tire (1) comprising
a pair of bead portions (4) each with a bead core (5) therein,
a carcass (16) extending between the bead cores (15),
a pair of clinch rubber components (4G) each disposed axially outside of the carcass in each bead portion,
an inner liner rubber component (9G) disposed radially inside of the carcass,
each radially inner end of the inner liner rubber component being connected with the clinch rubber, and
the inner liner rubber component having different rubber compound from the clinch rubber, wherein
the inner liner rubber component is formed by spirally winding a first rubber strip (11a) around the tire axis so as to extend in a circumferential direction of the tire,
the clinch rubber components are formed by spirally winding a second rubber strip (11b) around the tire axis so as to extend in a circumferential direction of the tire, and
the first rubber strip and the second rubber strip each has circumferential ends, **characterized in that**
a butt joint portion (j) is provided between one circumferential end of the first rubber strip and one circumferential end of the second rubber strip at least partially so that the first rubber strip and the second rubber strip are continuous with each other.

2. The pneumatic tire according to claim 1, wherein the first rubber strip and the second rubber strip are wound in the same direction.

3. The pneumatic tire according to claim 1, wherein the first rubber strip and the second rubber strip are wound in the opposite directions.

4. A method of manufacturing a pneumatic tire (1) having a pair of clinch rubber components (4G) each disposed axially outside of the carcass in each bead portion (14),
an inner liner rubber component (9G) disposed radially inside of the carcass,
each radially inner end of the inner liner rubber component being connected with the clinch rubber, and
the inner liner rubber component having different rubber compound from the clinch rubber, the method comprising the steps of
winding a first rubber strip (11a) spirally around a cylindrical body to form the inner liner rubber component,
winding a second rubber strip (11 b) spirally around the cylindrical body in the same direction as the first rubber strip to form the clinch rubber components, and
joining one circumferential end of the first rubber strip to one circumferential end of the second rubber strip so that the ends are butted at least partially.

5. The method of manufacturing the pneumatic tire according to claim 4, wherein
the second rubber strip is wound in the same direction with the first rubber strip,
the one end of the first rubber strip is a terminating end (21a) in which the winding thereof is terminated,
the one end of the second rubber strip is a starting end (20b) in which the winding thereof is started, and
the joining step joints the terminating end of the first rubber strip to the starting end of the second rubber strip.

6. The method of manufacturing the pneumatic tire according to claim 4, wherein
the second rubber strip is wound in the opposite direction of the first rubber strip,
the one end of the first rubber strip is a terminating end (21a) in which the winding thereof is terminated,
the one end of the second rubber strip is a terminating end (21 b) in which the winding thereof is terminated, and
the joining step joints the terminating end of the second rubber strip to the terminating end of the first rubber strip.

7. The method of manufacturing of the pneumatic tire according to claim 4, wherein
the inner liner rubber component has at least one side edge parallel to the circumferential direction of the cylindrical body formed by winding the first rubber strip along the circumferential direction of the cylindrical body continuously at least one round.

8. The method of manufacturing of the pneumatic tire according to claim 4, wherein
each clinch rubber component has at least one side edge parallel to the circumferential direction of the cylindrical body formed by winding the second rubber strip along the circumferential direction of the cylindrical body continuously at least one round.

## Patentansprüche

1. Luftreifen (1), umfassend:
ein Paar Wulstabschnitte (4), jeweils mit einem Wulstkern (5) darin,
eine Karkasse (16), die sich zwischen den Wulstkernen (15) erstreckt,
ein Paar Abriebstreifen-Kautschukkomponenten (4G), die jeweils axial außerhalb der Karkasse in jedem Wulstabschnitt angeordnet sind,
eine Innerliner-Kautschukkomponente (9G), die radial innerhalb der Karkasse angeordnet ist,
wobei jedes radial innere Ende der Innerliner-Kautschukkomponente mit dem Abriebstreifenkautschuk verbunden ist, und
die Innerliner-Kautschukkomponente eine gegenüber dem Abriebstreifenkautschuk verschiedene Kautschukmischung aufweist,
wobei
die Innerliner-Kautschukkomponente durch spiralförmiges Wickeln eines ersten Kautschukstreifens (11a) um die Reifenachse herum, sodass er sich in einer Umfangsrichtung des Reifens erstreckt, gebildet ist,
die Abriebstreifen-Kautschukkomponente durch spiralförmiges Wickeln eines zweiten Kautschukstreifens (11b) um die Reifenachse herum, sodass er sich in einer Umfangsrichtung des Reifens erstreckt, gebildet ist, und
der erste Kautschukstreifen und der zweite Kautschukstreifen jeweils Umfangsenden aufweisen,
**dadurch gekennzeichnet, dass**
ein Stoßverbindungsabschnitt (j) zwischen einem Umfangsende des ersten Kautschukstreifens und einem Umfangsende des zweiten Kautschukstreifens zumindest teilweise so vorgesehen ist, dass der erste Kautschukstreifen und der zweite Kautschukstreifen kontinuierlich miteinander sind.

2. Luftreifen nach Anspruch 1,
wobei der erste Kautschukstreifen und der zweite Kautschukstreifen in die gleiche Richtung gewickelt sind.

3. Luftreifen nach Anspruch 1,
wobei der erste Kautschukstreifen und der zweite Kautschukstreifen in die entgegengesetzten Richtungen gewickelt sind.

4. Verfahren zum Herstellen eines Luftreifens (1), der ein Paar Abriebstreifen-Kautschukkomponenten (4G), die jeweils axial außerhalb der Karkasse in jedem Wulstabschnitt (14) angeordnet sind, und
eine Innerliner-Kautschukkomponente (9G), die innerhalb der Karkasse angeordnet ist, aufweist,
wobei jedes radial innere Ende der Innerliner-Kautschukkomponente mit dem Abriebstreifenkautschuk verbunden ist, und
die Innerliner-Kautschukkomponente einen gegenüber dem Abriebstreifenkautschuk verschiedenen Kautschuk aufweist, wobei das Verfahren die Schritte umfasst
Wickeln eines ersten Kautschukstreifens (11a) spiralförmig um einen zylindrischen Körper herum, um die Innerliner-Kautschukkomponente zu bilden,
Wickeln eines zweiten Kautschukstreifens (11b) spiralförmig um den zylindrischen Körper herum in die gleiche Richtung wie der erste Kautschukstreifen, um die Abriebstreifen-Kautschukkomponenten zu bilden, und
Fügen eines Umfangsendes des ersten Kautschukstreifens an ein Umfangsende des zweiten Kautschukstreifens, sodass die Enden zumindest teilweise anstoßen.

5. Verfahren zum Herstellen eines Luftreifens nach Anspruch 4, wobei
der zweite Kautschukstreifen in die gleiche Richtung mit dem ersten Kautschukstreifen gewickelt wird,
das eine Ende des ersten Kautschukstreifens ein Abschlussende (21a) ist, in welchem das Wickeln davon beendet wird,
das eine Ende des zweiten Kautschukstreifens ein Startende (20b) ist, in welchem das Wickeln davon gestartet wird, und
der Fügeschritt das Abschlussende des ersten Kautschukstreifens an das Startende des zweiten Kautschukstreifens fügt.

6. Verfahren zum Herstellen des Luftreifens nach Anspruch 4, wobei
der zweite Kautschukstreifen in die entgegengesetzte Richtung des ersten Kautschukstreifens gewickelt wird,
das eine Ende des ersten Kautschukstreifens ein Abschlussende (21a) ist, in welchem das Wickeln davon beendet wird,
das eine Ende des zweiten Kautschukstreifens ein Abschlussende (21b) ist, in welchem das Wickeln davon beendet wird, und
der Fügeschritt das Abschlussende des zweiten Kautschukstreifens an das Abschlussende des ersten Kautschukstreifens fügt.

7. Verfahren zum Herstellen des Luftreifens nach Anspruch 4, wobei
die Innerliner-Kautschukkomponente zumindest eine Seitenkante aufweist, die parallel zu der Umfangsrichtung des zylindrischen Körpers liegt und die durch Wickeln des ersten Kautschukstreifens entlang der Umfangsrichtung des zylindrischen Körpers kontinuierlich zumindest eine Umdrehung gebildet wird.

8. Verfahren zum Herstellen des Luftreifens nach Anspruch 4, wobei
jede Abriebstreifen-Kautschukkomponente zumindest eine Seitenkante aufweist, die parallel zu der Umfangsrichtung des zylindrischen Körpers liegt und die durch Wickeln des zweiten Kautschukstreifens entlang der Umfangsrichtung des zylindrischen Körpers kontinuierlich zumindest eine Umdrehung gebildet wird.

## Revendications

1. Bandage pneumatique (1) comprenant
une paire de portions de talons (4), chacune avec une âme de talon (5) à l'intérieur,
une carcasse (16) s'étendant entre les âmes de talons (15),
une paire de composants en caoutchouc de pied de talon (4G), disposés chacun axialement à l'extérieur de la carcasse dans chaque portion de talon,
un composant en caoutchouc de revêtement intérieur (9G), disposé à l'intérieur de la carcasse,
chaque extrémité radialement intérieure du composant en caoutchouc de revêtement intérieur étant raccordée au composant en caoutchouc de pied de talon, et
le composant en caoutchouc de revêtement intérieur ayant un composé en caoutchouc différent du composant en caoutchouc de pied de talon, dans lequel
le composant en caoutchouc de revêtement intérieur est formé en enroulant en spirale un premier ruban de caoutchouc (11a) autour de l'axe du pneumatique de manière à s'étendre dans une direction circonférentielle du pneumatique,
les composants en caoutchouc de pied de talon sont formés en enroulant en spirale un second ruban de caoutchouc (11b) autour de l'axe du pneumatique de manière à s'étendre dans une direction circonférentielle du pneumatique, et
le premier ruban en caoutchouc et le second ruban en caoutchouc possèdent chacun des extrémités circonférentielles, **caractérisé en ce**
**que**
une portion de jonction en aboutement (j) est prévue entre une extrémité circonférentielle du premier ruban en caoutchouc et une extrémité circonférentielle du second ruban en caoutchouc au moins partiellement de telle façon que le premier ruban en caoutchouc et le second ruban en caoutchouc soient mutuellement en continu.

2. Bandage pneumatique selon la revendication 1, dans lequel le premier ruban en caoutchouc et le second ruban en caoutchouc sont enroulés dans la même direction.

3. Bandage pneumatique selon la revendication 1, dans lequel le premier ruban en caoutchouc et le second ruban en caoutchouc sont enroulés dans des directions opposées.

4. Procédé de fabrication d'un bandage pneumatique (1) ayant une paire de composants en caoutchouc de pied de talon (4G) disposés chacun axialement à l'extérieur de la carcasse dans chaque portion de talon (14),
un composant en caoutchouc de revêtement intérieur (9G) disposé radialement à l'intérieur de la carcasse,
chaque extrémité radialement intérieure du composant en caoutchouc de revêtement intérieur étant raccordée au composant en caoutchouc de pied de talon, et
le composant en caoutchouc de revêtement intérieur ayant un composé en caoutchouc différent du composant en caoutchouc de pied de talon, le procédé comprenant les étapes consistant à :
enrouler un premier ruban en caoutchouc (11a) en spirale autour d'un corps cylindrique pour former le composant en caoutchouc de revêtement intérieur,
enrouler un second ruban en caoutchouc (11a) en spirale autour du corps cylindrique dans la même direction que le premier ruban en caoutchouc pour former les composants en caoutchouc de pied de talon, et
joindre une extrémité circonférentielle du premier ruban en caoutchouc à une extrémité circonférentielle du second ruban en caoutchouc de telle façon que les extrémités soient au moins partiellement en aboutement.

5. Procédé de fabrication d'un bandage pneumatique selon la revendication 4, dans lequel
le second ruban en caoutchouc est enroulé dans la même direction que le premier ruban en caoutchouc,
l'extrémité concernée du premier ruban en caoutchouc est une extrémité de terminaison (21a) à laquelle se termine l'enroulement de celui-ci,
l'extrémité concernée du second ruban en caoutchouc est une extrémité de départ (20b) à laquelle démarre l'enroulement de celui-ci, et
l'étape de jonction assure la jonction de l'extrémité de terminaison du premier ruban en caoutchouc et de l'extrémité de départ du second ruban en caoutchouc.

6. Procédé de fabrication d'un bandage pneumatique selon la revendication 4, dans lequel
le second ruban en caoutchouc est enroulé dans une direction opposée au premier ruban en caoutchouc,
l'extrémité concernée du premier ruban en caoutchouc est une extrémité de terminaison (21a) à laquelle l'enroulement de celui-ci se termine,
l'extrémité concernée du second ruban en caoutchouc est une extrémité de terminaison (21b) à laquelle se termine l'enroulement de celui-ci, et
l'étape de jonction assure la jonction de l'extrémité de terminaison du second ruban en caoutchouc et de l'extrémité de terminaison du premier ruban en caoutchouc.

7. Procédé de fabrication d'un bandage pneumatique selon la revendication 4, dans lequel
le composant en caoutchouc de revêtement intérieur possède au moins un bord latéral parallèle à la direction circonférentielle du corps cylindrique formé en enroulant le premier ruban en caoutchouc le long de la direction circonférentielle du corps cylindrique en continu sur au moins un tour.

8. Procédé de fabrication d'un bandage pneumatique selon la revendication 4, dans lequel
chaque composant en caoutchouc de pied de talon possède au moins un bord latéral parallèle à la direction circonférentielle du corps cylindrique formé en enroulant le second ruban en caoutchouc le long de la direction circonférentielle du corps cylindrique en continu sur au moins un tour.
